# EUROPEAN PATENT SPECIFICATION

(11) **EP 4 377 416 B1**
(45) Date of publication and mention of the grant of the patent: **01.04.2026**
(21) Application number: 22917643.3
(22) Date of filing: 29.12.2022
(51) Int. Cl.: C09K 11/06, B41M 3/14, C09D 11/00, C09K 11/65, B42D 25/387, G07D 7/00

(54) **MARKING METHOD SCREENED IN DIFFERENT SPECTRUM**
IN VERSCHIEDENEN SPEKTREN GERASTERTES MARKIERUNGSVERFAHREN
PROCÉDÉ DE MARQUAGE POUR LE CRIBLAGE DANS DIFFÉRENTS SPECTRES

(30) Priority: 01.10.2022 TR 202215061; 21.12.2022 TR 202219916
(43) Date of publication of application: 05.06.2024
(73) Proprietor: Nanografi Nano Teknoloji Anonim Sirketi, 06800 Ankara (TR)
(72) Inventor: FOROUGH, Mehrdad, 06800 Ankara (TR); SUVACI YILDIZ, Zeynep, 06800 Ankara (TR); YILDIZ, Pelin, 06800 Ankara (TR); AHLATCI, Ahmet, 06800 Ankara (TR); KAYILI, Salih Kayili, 06800 Ankara (TR); BASCI, Mehmet, 06800 Ankara (TR)
(74) Representative: Berkkam, Ayfer
(86) International application number: PCT/TR2022/051686
(87) International publication number: WO 2024/072344

(56) References cited:
- WO-A1-2019/159171
- WO-A1-2022/075550
- AL-QAHTANI SALHAH D ET AL: "Development of fluorescent carbon dots ink from rice straw waste toward security authentication", JOURNAL OF MOLECULAR LIQUIDS, ELSEVIER, AMSTERDAM, NL, vol. 354, 14 March 2022 (2022-03-14), XP087014692, ISSN: 0167-7322, [retrieved on 20220314], DOI: 10.1016/J.MOLLIQ.2022.118927

## Description

### Technical Field

The present invention relates to a marking method that can be screened in different spectra when applied to the surface of precious metals such as gold and silver for tracking and security purposes.

### Background Art

Most security inks available today are based on luminescent materials that absorb a high-energy photon and emit a low-energy photon, technically called as "downshifting," in which the hidden label is invisible in daylight and becomes visible under UV illumination. However, these single emission-based tags are prone to duplication. In order to overcome this, a luminescent ink with the excitation luminescence properties as "downshifting" and "upconversion" is recommended. This increases the number of parameters required to decode the label (tag), while decreasing the probability of decoding and duplication. However, most of the materials recently reported for this purpose are based on fluorophores that are less stable and highly toxic.

No patent application was found in the literature concerning the use of specific materials applied to the gold surface for tracking application. The main reason for this is the practically poor affinity of the gold surface to coating materials. In other words, since gold does not interact with the materials commonly used in tracking systems due to its inertness, the material to be coated/printed cannot adhere to the gold surface.

US patent application US2007069153A1, one of the known prior art applications, explains battery-powered devices that can verify the identity of batteries. In one embodiment, a device includes a battery, an excitation source, a photodetector, and an operating system. The device may be at least partially battery-operated. The excitation source may generate radiation and is arranged to allow the radiation to contact the surface of the battery. The photodetector can detect radiation emitted from the battery. The operating system can determine whether the battery is an original battery for this device. Although this application mentions a marking system, the application does not mention capturing different images on a glossy surface and different layers.

US patent application US8197058B2, which is also one of the known applications of the technology, mentions a method of inkjet printing. The method includes,
- providing an ink receiver with an image thereon,
- forming and curing a first curable liquid layer on the ink receiver,
- forming the outermost layer of a second curable liquid over the first cured only curable liquid and at least partially covering the image.

Here, the second curable liquid includes an adhesive that is not present in the first curable liquid, wherein at least one of the first and second curable liquids is inkjet printing. Further, a polymerizable adhesive can be used in a curable liquid to prevent defacing an identification document. Further, a set of curable fluids for inkjet printing includes a first curable fluid and a second curable fluid, wherein the second curable fluid includes an adhesive that is not present in the first curable fluid. Again, this involves creating a print on a surface by combining an ink print with a resin. It will not be mentioned again here that the system used will produce a different image in different light spectra on a glossy surface.

The invention, which is the subject of PCT Application No. WO2020013318A1, another known prior art application, is a method of making a substrate having a modification layer, the method comprising:
- laminating a protective layer to a surface of a substrate having recesses, on which the recesses are open, and to the inner surface of the recesses;
- removing a portion of the protective layer to obtain the substrate having the surface on which the recesses are openly exposed and the protective layer laminated on the inner surface of the recesses;
- laminating a first modification layer to the surface on which the recesses open, the first modification layer being permeable to a solvent that dissolves the protective layer,
- contacting the solvent with the substrate to remove the protective layer laminated on the inner surface of the recesses to obtain a substrate having the first modification layer laminated on the surface on which the recesses open.

In the method according to the invention, it is mentioned that the laminate is applied to the surface by making indentations in the surface. Although the process is inscription/marking with a laminate layer according to the invention, the process involves deformation. At this point, even bright precious metals must be deformed. Furthermore, no improvement has been made specifically for the display of one or more labels at certain wavelengths.

Finally, another well-known prior art application, European Patent No. EP2910614B1 provides a coating composition having excellent visible light transmittance and photoluminescence properties and a wavelength conversion thin film fabricated therewith. The coating composition according to the present invention contains a solvent, a polysilazane coating, and a wavelength conversion agent and has a visible light transmittance of 50% or more compared to an aqueous solution. According to the present invention, a wavelength-converting thin film having excellent visible light transmittance and photoluminescence properties can be prepared. Although photoluminescence properties are mentioned in the invention, no mention of an improvement to prevent fading has been reported to occur especially on glossy surfaces. In addition, the invention does not mention that by marking in more than one layer, different images can be captured at different light lengths. Furthermore, WO2022/075550A1 discloses a marking method using an ink comprising graphene quantum dots, a polymer binder and a blue phosphor.

### Brief description of the invention

The aim of the present invention is to develop a marking method to be displayed in different spectra applicable to the surfaces of precious metals such as gold.

Another aim of the invention is developing of a marking method that can radiate in different wavelengths and/or electromagnetic regions.

Another aim of the invention is to develop a marking method that provides a two-stage tracking system in which wavelengths can be adjusted and applied without fading each other.

Another aim of the invention is to develop a tagging method in which the possibility of imitation of the secret tag and the security vulnerability are reduced to a minimum level with a multi-stage tracking system.

Another aim of the invention is to develop a marking method using quantum dots due to their stability and non-toxicity.

Another aim of the invention is to develop a marking method using quantum dots due to their stability and non-toxicity.

Another aim of the invention is to develop a marking method capable of exhibiting a high resistance to physical and/or chemical deformations.

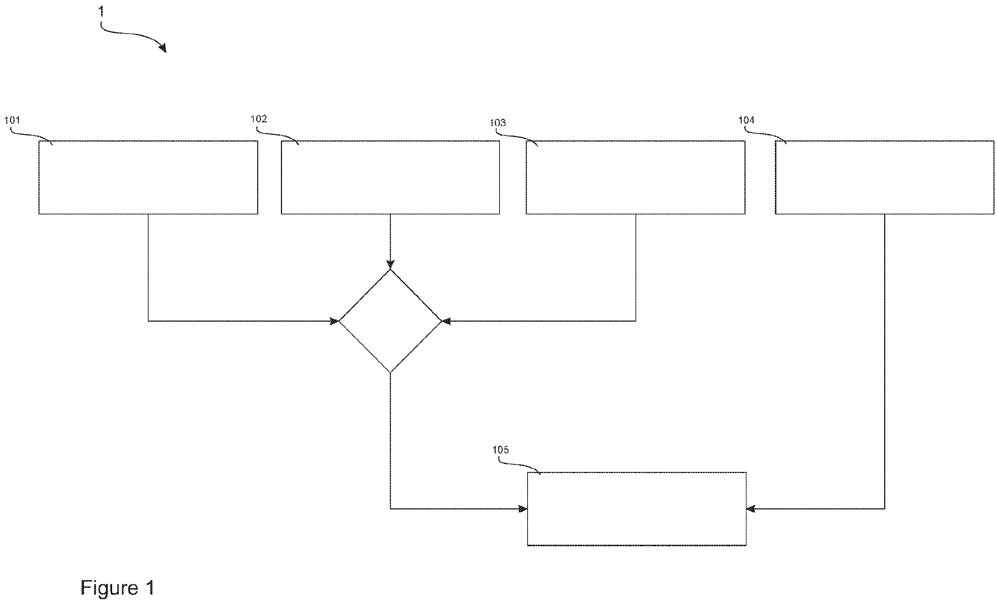

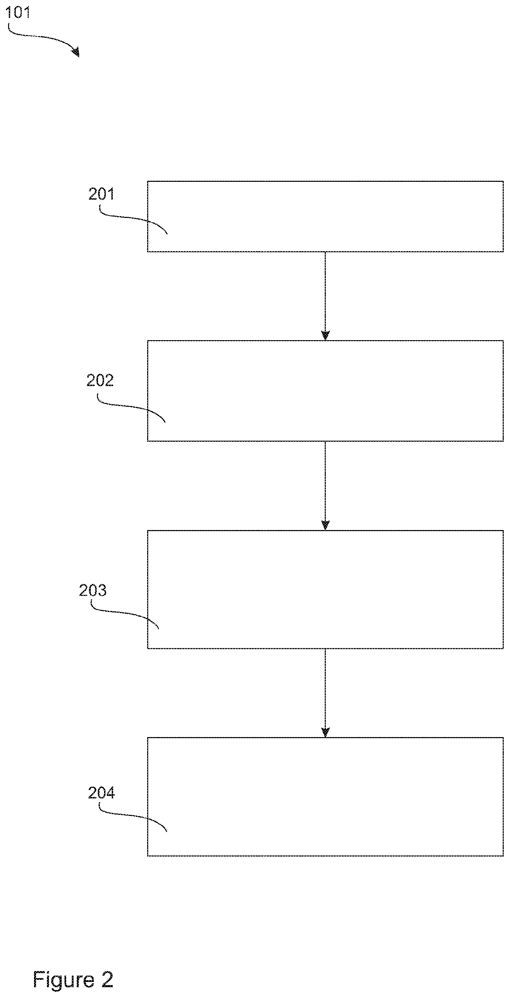

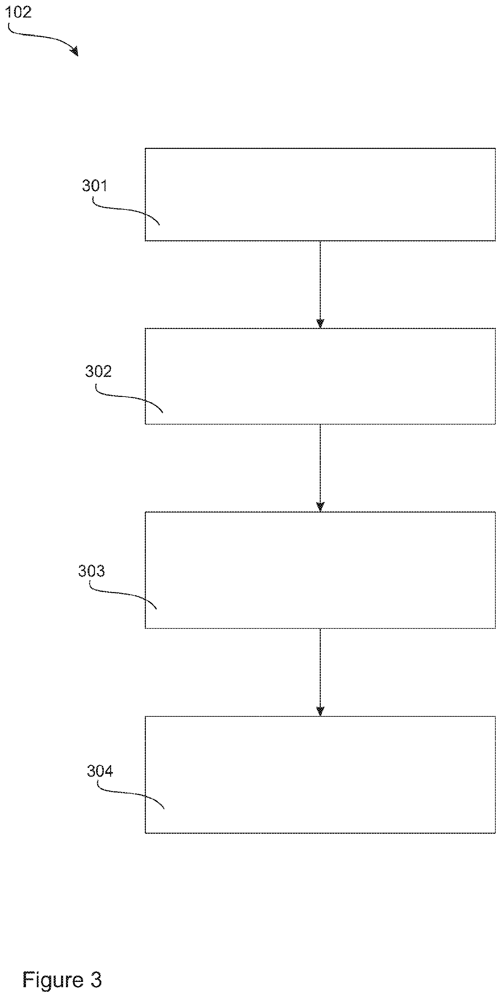

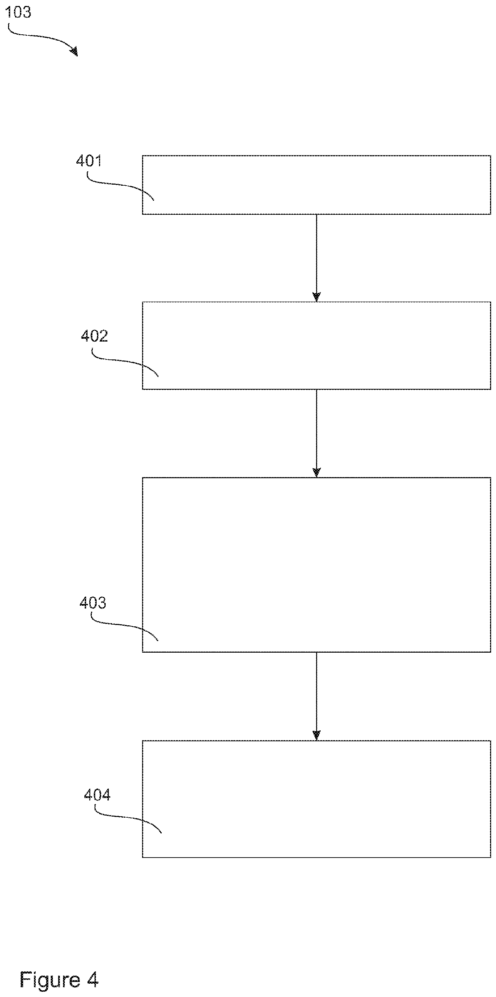

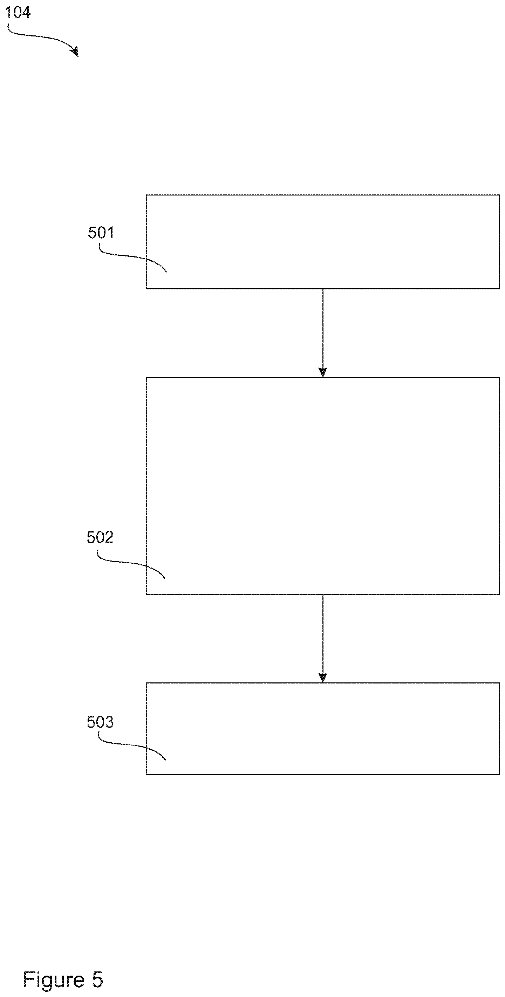

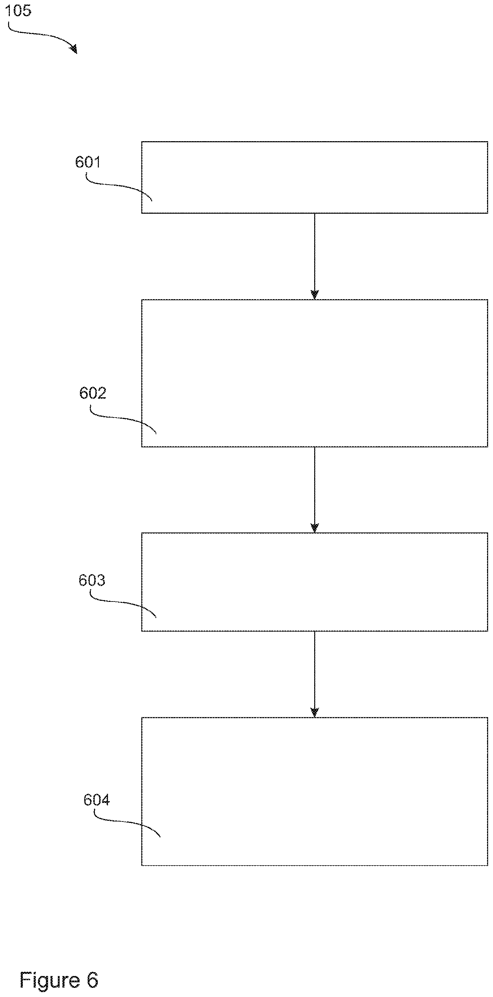

### The Figure Description

In order to better explain the marking method to be displayed in different spectra developed with the invention, the figures and related explanations are given below.
Figure-1 The flow chart of the marking method to be displayed in different spectra according to the invention.
Figure-2 The flow chart of the graphene quantum dot synthesis method used in the marking method to be displayed in different spectra according to the invention.
Figure-3 The flow chart of the graphene quantum dot synthesis method used in the marking method to be displayed in different spectra according to the invention.
Figure-4 The flow chart of the graphene quantum dot synthesis method used in the marking method to be displayed in different spectra according to the invention.
Figure-5 The flow chart of the carbon quantum dot synthesis method used in the marking method to be displayed in different spectra according to the invention.
Figure-6 The flow chart of the ink preparation method used in the marking method to be displayed in different spectra according to the invention.

The elements shown in the figures are numbered and their equivalents are given below;

### 1) Marking Method

101. Graphene Quantum Dot Synthesis Method A
102. Graphene Quantum Dot Synthesis Method B
103. Graphene Quantum Dot Synthesis Method C
104. Carbon Quantum Dot Synthesis Method D
105. Marking Compound Production Method E

### Detailed Description of the Invention

The present invention is a marking method (1) to be displayed in different spectra without affecting the luster of the metal applied to the surfaces of precious metals in the security field. Together with the process, the marking method (1) enables labeling in more than one layer/level and wavelengths at different spectra. Moreover, the present invention is a marking method (1) that does not lose its chemical and physical resistance if the structure of the substance is affected.

According to the invention, to develop the chemical ink belonging to the marking method (1), some compound groups are required including curing and photoluminescent compound groups.

Graphene/carbon quantum dots and fluorescein are used as sensing/emitting elements to prepare the present security ink. Accordingly, the invention can display fluorescence emission/radiation in different wavelengths/electromagnetic regions (UV, Vis, NIR, IR). It provides a tracking system with two or more authentication levels because the wavelength is adjustable and the used dyes can be combined without quenching/bleaching each other. This multi-level tracking system is expected to minimize the possibility of imitating almost the naked eye-invisible label and the security problem as well. In addition, the stability and non-toxicity of the quantum dots have been studied and demonstrated in the literature. The fluorophore(s) used for the tracking system is attached/immobilized to the gold surface with the epoxy resin.

The multilevel tracking system cannot adhere directly to the gold bar surface. The fluorophore is applied to the gold surface with epoxy resin since it serves as a binder between the security ink (providing the tracking system) and the gold surface. After the fluorophore-containing epoxy resin is applied to the gold surface, it is cured and the hidden label, which has a unique tracking system, adheres easily to the gold surface. The curing process solidifies the fluorophore-containing epoxy resin on the gold surface, and the bonding process takes place. The results of the physical and chemical stability tests conducted in laboratory conditions show that the developed tracking system does not leave the gold surface without losing the quality/density of the fluorophore emission and hue as well as leaving no damage on the gold surface after curing (melting the gold, etc.).

Epoxy has a broad variety of applications, including metal coatings, composites, electronics, electrical components (e.g., for chips on circuit boards), LEDs, high-voltage electrical insulators, brush manufacturing, fiber-reinforced plastics and structural adhesives.

Epoxy is a family of key polymeric components and a class of reactive pre-polymers and polymer-containing epoxide groups also known as polyepoxides. The epoxide functional group is also referred to as epoxide. The IUPAC name for an epoxide group is oxirane. Epoxy-based resins are also known to adhere to metal surfaces with high affinity. With this invention, the interaction that gold metal does not show with many coating materials due to its inert structure is carried out with the epoxy resin. The interaction between the gold surface and epoxy resin is improved by doping/incorporating the epoxy resin with various sulfur and cyano functional group-containing substances.

Epoxy resins can react (crosslink) either with themselves by catalytic homo-polymerization or with a variety of co-reactants including polyfunctional amines, acids (and acid anhydrides), phenols, alcohols, and thiols (usually mercaptans). These co-reactants are often referred to as curing agents or hardeners, and the crosslinking reaction is known as the curing step. In order for an adhesion to bond (hold together) to surfaces (the substrate), there must be several types of interactions between the adhesive and the two substrates. The first type of the interaction is that the adhesive must wet the substrate, which means the adhesive must spread over a film on the substrate surface. The epoxy resin is cured with the help of substances containing amine groups.

Fluorescein is an organic compound and a dye. It is available as a dark orange/red powder and is slightly soluble in water and alcohol. It is used in many applications as a fluorescent tracer and is listed among the World Health Organization's essential medicines. The fluorescence emission of this molecule is very intense with peak excitation absorbed at 494 nm and emission peak at 521 nm. Fluorescein has an isosbestic point (equal absorption for all pH values) at 460 nm. Once this particular powder mixes with the resin, it has a very high emission intensity for the tracking system. Therefore, fluorescein gives the printed resin an easily traceable appearance under the UV illumination.

A new class of fluorescent carbon nanomaterials is carbon quantum dots (CQDs), i.e., carbon nanodots less than 10 nm in size exhibiting some form of the surface passivation. They feature high stability, good conductivity, low toxicity, environmental friendliness, simple synthesis pathways, and unique optical properties comparable to conventional/traditional quantum dots. Carbon quantum dots have been extensively studied mainly for their intense and tunable fluorescent emission properties, which enable their application in biomedicine, catalysis, and biosensing applications.

Similarly, graphene quantum dots (GQDs) are graphene nanodots with a size of less than 100 nm. Due to their outstanding properties such as low toxicity, stable photoluminescence, chemical stability, and pronounced quantum confinement effect, graphene quantum dots are considered a new nanomaterial for biological, optoelectronics, energy, and environmental applications. In the invention, carbon quantum dots and graphene quantum dots are doped/incorporated into the epoxy resin along with fluorescein as a secondary and tertiary verification level allowing the tracking system to radiate at the desired wavelength(s).

For carbon quantum dots, the excitation wavelength ranges from 350 to 600 nm, whereas the emission wavelength is between 400 and 750 nm. For graphene quantum dots, the excitation wavelength ranges from 200 to 700 nm, while the emission wavelength ranges from 300 to 850 nm. In this way, the verification levels are diversified by different combinations to obtain different emission colors (violet, blue, green, red, orange, etc.), and the possibility of imitation is minimized.

Screen printing, a printing technique, has recently become significant for branding various industrial products simultaneously with the development of the industry. After various types of polyester silk fabric stretched on a wooden or metal frame are covered with a film layer called photo film emulsion and exposed to light, the graphic/symbol to be printed appears like a stencil/pattern on the fabric or desired surface. The light-sensitive areas are emptied with the help of water and a fine and clear pattern is created called a stencil. The printing is done with the help of a squeegee (a rubber with a sharp tip or aperture).

The screen printing can be applied to almost all kinds of materials and surfaces. With the materials such as metal, ceramics, fabric, and glass, which the press cannot print on, the screen-printing technique is being used extensively. The prints are applied to the gold surface with the developed epoxy resin-based security ink printed via the screen-printing method.

The main purpose of the invention is to use luminescent materials that can be excited simultaneously at different wavelengths. There are alternative fabrication methods for graphene quantum dots and carbon quantum dots that can be excited at different wavelengths exhibiting different fluorescence colors.

For graphene quantum dots;
Graphene quantum dot synthesis method A (101):
   (201) Phenol is dissolved in acetone using an ultrasonic apparatus.
   (202) Hydrogen peroxide is added dropwise to the solution and mixed again with the ultrasonic device for 5 minutes.
   (203) The obtained solution is hydrothermally synthesized in a stainless-steel autoclave at 160°C to 220°C or preferably at 200°C for 20 hours.
   (204) After the purification and dialysis (against pure water) of the obtained graphene quantum dots, the solution is dried.
Graphene quantum dot synthesis method B (102):
   (301) Phenol and sodium thiosulfate are dissolved in acetone using an ultrasonic apparatus.
   (302) Hydrogen peroxide is added dropwise to the solution and mixed again with the ultrasonic apparatus.
   (303) The obtained solution is synthesized by hydrothermal technique in a stainless-steel autoclave in the range of 160°C to 220°C or preferably at 200°C for 20 hours.
   (304) After the purification and dialysis (against pure water) of the obtained graphene quantum dots, the solution is dried using a suitable freeze-drying instrument.
Graphene quantum dot synthesis method C (103):
   (401) Glucose is dissolved in deionized water.
   (402) After adding the ammonia solution, the mixture is diluted five times with deionized water.
   (403) The obtained solution is irradiated with microwave light between 280 W and 700 W, preferably 280 W, for 5 to 30 minutes, preferably 15 minutes, and the synthesis is carried out.
   (404) After the purification and dialysis of the obtained graphene quantum dots, a drying process is performed.
Similarly, for carbon quantum dot synthesis;
Carbon quantum dot synthesis method D (104):
   (501) Thiourea, citric acid and urea are dissolved in dimethylformamide.
   (502) After homogenization of the solution, it is placed in the stainless-steel autoclave and the carbon quantum dots are synthesized at 160°C to 200°C, preferably at 160°C, for 6 to 10 hours, preferably for 8 hours.
   (503) After the purification and dialysis (against pure water) of the obtained solution, a drying process is performed.
Marking Compound Production Method E (105);
   (601) The epoxy resin and epoxy hardener are mixed in a ratio of 2:1.
   (602) After homogenization, the synthesized graphene quantum dots, carbon quantum dots, fluorescein, and additives, sulfur and cyano group-containing compounds are added and mixed in a certain ratio.
   (603) After the mixture is homogenized, the desired hidden label is printed on the gold surface using a screen-printing device.
   (604) The gold surface applied after printing is cured in the range of 80 to 150°C, preferably at 100°C for 30 minutes to 3 hours, or preferably under UV illumination for 1 hour.

The ratio of fluorophores, namely fluorescein, graphene quantum dots, and carbon quantum dots in the resin:
If the fluorophores are not present in sufficient observable intensity in the epoxy resin, adequate emission cannot be observed. In addition, self-quenching is observed when the fluorophores are present in the resin in a ratio greater than the optimized ratio.

After the screen printing, the printed surface should not be subjected to any physical stress until it has cured. After curing, no stress will damage the printed area.

The epoxy resin is produced by the reaction of acidic hydroxy groups with epichlorohydrin. Hydroxy group:
It can be derived from aliphatic diols, polyols (polyether polyols), phenolic compounds or dicarboxylic acids. Instead of the hydroxy group, the nitrogen atom of the amine or amidine can also be reacted with epichlorohydrin. Polyfunctional amines, acids (and acid anhydrides), phenols, alcohols, or thiols (usually mercaptans) can be used instead of epoxy hardeners.

When the developed security ink is printed on the surface of a precious metal by the present marking method, which is accessible after printing and complete curing upon illumination with different wavelengths, it will be capable of simultaneous emission of a bright fluorescent hue. Furthermore, it may emit as a result of illumination with different wavelengths.

The main element that the invention aims to solve is the concealment of a fluorophore compound that is capable of exhibiting a bright fluorescent emission when excited at a certain wavelength and that is concealed in the composition of fluorophore dyes prepared by this marking methodology. This fluorophore compound can remain hidden among other emitting compounds without excitation beyond the specific wavelength at which it is activated. In this way, its presence can only be detected upon the illumination at specific wavelengths and measurement equipment filtered to the appropriate wavelength.

The illumination with the wavelength required for excitation of the fluorophore compounds can be provided by sunlight or conventional UV illumination lamps. To observe the marking ink of the present invention under the aforementioned illumination sources, the necessary filters can be placed over the windows opened on a credit card-sized plastic card. In order to view the label of the present invention under the light, it will be sufficient to examine the labels through the filters.

## Claims

1. A marking method (1) with a specific marking dye **characterized by** the following steps;
- Dissolving phenol in acetone with the help of a sonicator (201),
- Adding hydrogen peroxide dropwise to the solution and mixing it again with the sonicator (202),
- Placing the resulting solution in a Teflon-lined autoclave at 160°C and 220°C or preferably at 200°C for 20 h to synthesize graphene quantum dots via the hydrothermal synthesis methode (203),
- Obtaining and purifiying the synthesized graphene quantum dots powder by dialysis against pure water, and freeze-drying of the above solution (204),
- Mixing epoxy resin and epoxy hardener in a ratio of 2:1 (601),
- Mixing the above mixture with special compounds containing additives, sulfur and cyano groups, and the synthesized graphene quantum dots and fluorescein after the homogenization process (602),
- Printing on the metal surface with a screen printing device as the desired hidden label (603),
- Curing the applied surface after printing within the course of 30 minutes to 3 hours under UV illumination (604),
In order to be displayed in different spectra applied to the surface of precious metals such as gold and silver for tracking and security purposes.

2. A marking method (1) with a marking dye **characterized by** the following steps;
- Dissolving phenol and sodium thiosulfate in acetone with the help of a sonicator (301),
- Dropwise additing of hydrogen peroxide into the solution and mixing it again with the sonicator (302),
- Placing the resulting solution in a Teflon-lined autoclave at 160°C and 220°C or preferably at 200°C for 20 h (203) to synthesize graphene quantum dots via the hydrothermal synthesis methode (303),
- Obtaining and purifiying the synthesized graphene quantum dots powder by dialysis against pure water, and freeze-drying of the above solution (304),
- Mixing epoxy resin and epoxy hardener in a ratio of 2:1 (601),
- Mixing the above mixture with special compounds containing additives, sulfur and cyano groups, and the synthesized graphene quantum dots and fluorescein after the homogenization process (602),
- Printing on the metal surface with a screen printing device as the desired hidden label (603),
- Curing the applied surface after printing within the course of 30 minutes to 3 hours under UV illumination (604),
In order to be displayed in different spectra applied to the surface of precious metals such as gold and silver for tracking and security purposes.

3. A marking method (1) with a marking dye **characterized by** the following steps;
- Dissolving glucose in deionized water (401),
- After adding the ammonia solution, the solution is diluted five times with deionized water (402),
- The obtained solution is irradiated with microwave light between 280 W and 700 W, preferably 280 W, for 5 to 30 minutes, preferably 15 minutes, and the synthesis is carried out (403),
- After the purification and dialysis of the obtained graphene quantum dots, a drying process is performed (404),
- Mixing epoxy resin and epoxy hardener in a ratio of 2:1 (601),
- Mixing by adding special compounds containing additives, sulfur and cyano groups as well as the synthesized graphene quantum dots and fluorescein after the homogenization process (602)
- After the mixture has been homogenized, it is printed on the gold surface with a screen printing device as the desired hidden label (603),
- Curing of the applied surface after printing in the course of 30 minutes to 3 hours under UV illumination (604),
In order to be displayed in different spectra applied to the surface of precious metals such as gold and silver for tracking and security purposes.

4. A marking method (1) with a marking dye **characterized by** the following steps;
- Dissolving thiourea, citric acid and urea in dimethylformamide (501),
- After homogenization of the solution, the solution is placed in the stainless steel autoclave and the carbon quantum dots are synthesized at 160°C to 200°C, preferably at 160°C, for 6 to 10 hours, preferably for 8 hours (502),
- After purification and dialysis (against pure water) of the obtained solution, a drying process is performed (503),
- Mixing epoxy resin and epoxy hardener in a ratio of 2:1 (601),
- Mixing the above mixture with special compounds containing additives, sulfur and cyano groups, and the synthesized carbon quantum dots and fluorescein after the homogenization process (602),
- Printing on the metal surface with a screen printing device as the desired hidden label (603),
- Curing the applied surface after printing within the course of 30 minutes to 3 hours under UV illumination (604),
In order to be displayed in different spectra applied to the surface of precious metals such as gold and silver for tracking and security purposes.

5. A marking method (1) with a marking dye **characterized by** the following steps;
- Dissolving phenol in acetone with the help of a sonicator (201),
- Adding hydrogen peroxide dropwise to the solution and mix it again with a sonicator (202),
- Placing the resulting solution in a Teflon-lined autoclave at 160°C and 220°C or preferably at 200°C for 20 h to synthesize graphene quantum dots via the hydrothermal synthesis methode (203),
- Obtaining and purifiying the synthesized graphene quantum dots powder by dialysis against pure water, and freeze-drying of the above solution (204),
- Dissolving phenol and sodium thiosulfate in acetone with the help of a sonicator (301),
- Dropwise additing of hydrogen peroxide into the solution and mixing it again with the sonicator (302),
- Placing the resulting solution in a Teflon-lined autoclave at 160°C and 220°C or preferably at 200°C for 20 h to synthesize graphene quantum dots via the hydrothermal synthesis methode (303),
- Obtaining and purifiying the synthesized graphene quantum dots powder by dialysis against pure water, and freeze-drying of the above solution (304),
- Mixing epoxy resin and epoxy hardener in a ratio of 2:1 (601),
- Mixing the above mixture with special compounds containing additives, sulfur and cyano groups, and the synthesized graphene quantum dots and fluorescein after the homogenization process (602),
- Printing on the metal surface with a screen printing device as the desired hidden label (603)
- Curing the applied surface after printing within the course of 30 minutes to 3 hours under UV illumination (604),
In order to be displayed in different spectra applied to the surface of precious metals such as gold and silver for tracking and security purposes.

6. A marking method (1) with a marking dye **characterized by** the following steps;
- Dissolving phenol in acetone with the help of sonicator (201),
- Adding hydrogen peroxide drop by drop to the solution and mix it again with a sonicator (202),
- Placing the resulting solution in a Teflon-lined autoclave at 160°C and 220°C or preferably at 200°C for 20 h to synthesize graphene quantum dots via the hydrothermal synthesis methode (203),
- Obtaining and purifiying the synthesized graphene quantum dots powder by dialysis against pure water, and freeze-drying of the above solution (204),
- Dissolving glucose in deionized water (401),
- After adding the ammonia solution, the solution is diluted five times with deionized water (402),
- The obtained solution is irradiated with microwave light between 280 W and 700 W, preferably 280 W, for 5 to 30 minutes, preferably 15 minutes, and the synthesis is carried out (403),
- After the purification and dialysis of the obtained graphene quantum dots, a drying process is performed (404),
- Mixing epoxy resin and epoxy hardener in a ratio of 2:1 (601),
- Mixing the above mixture with special compounds containing additives, sulfur and cyano groups, and the synthesized graphene quantum dots and fluorescein after the homogenization process (602),
- Printing on the metal surface with a screen printing device as the desired hidden label (603),
- Curing the applied surface after printing within the course of 30 minutes to 3 hours under UV illumination (604),
In order to be displayed in different spectra applied to the surface of precious metals such as gold and silver for tracking and security purposes.

7. A marking method (1) with a marking dye **characterized by** the following steps;
- Dissolving phenol in acetone with the help of sonicator (201),
- Adding hydrogen peroxide drop by drop to the solution and mix it again with a sonicator (202),
- Placing the resulting solution in a Teflon-lined autoclave at 160°C and 220°C or preferably at 200°C for 20 h to synthesize graphene quantum dots via the hydrothermal synthesis methode (203),
- Obtaining and purifiying the synthesized graphene quantum dots powder by dialysis against pure water, and freeze-drying of the above solution (204),
- Dissolving thiourea, citric acid and urea in dimethylformamide (501),
- After homogenization of the solution, the solution is placed in the stainless steel autoclave and the carbon quantum dots are synthesized at 160°C to 200°C, preferably at 160°C, for 6 to 10 hours, preferably for 8 hours (502),
- Placing the resulting solution in a Teflon-lined autoclave at 160°C and 220°C or preferably at 200°C for 20 h to synthesize graphene quantum dots via the hydrothermal synthesis methode (503),
- Mixing epoxy resin and epoxy hardener in a ratio of 2:1 (601),
- Mixing the above mixture with special compounds containing additives, sulfur and cyano groups, and the synthesized carbon quantum dots, graphene quantum dots and fluorescein after the homogenization process (602),
- Printing on the metal surface with a screen printing device as the desired hidden label (603),
- Curing the applied surface after printing within the course of 30 minutes to 3 hours under UV illumination (604),
In order to be displayed in different spectra applied to the surface of precious metals such as gold and silver for tracking and security purposes.

8. A marking method (1) with a marking dye **characterized by** the following steps;
- Dissolving phenol and sodium thiosulfate in acetone with the help of a sonicator (301),
- Dropwise addition of hydrogen peroxide into the solution and mix again with a sonicator device (302),
- Placing the resulting solution in a Teflon-lined autoclave at 160°C and 220°C or preferably at 200°C for 20 h to synthesize graphene quantum dots via the hydrothermal synthesis methode (303),
- Obtaining and purifying the synthesized graphene quantum dots powder by dialysis against pure water, and freeze-drying the above solution (304),
- Dissolving glucose in deionized water (401),
- Diluting the solution five times with deionized water after ammonia is added to the solution (402),
- Irradiating the obtained solution with microwave lighted between 280 W and 700 W, preferably 280 W, for 5 to 30 minutes, preferably 15 minutes, and carrying out the synthesis (403),
- Obtaining and purifiying the synthesized graphene quantum dots powder by dialysis against pure water, and freeze-drying of the above solution (404),
- Mixing epoxy resin and epoxy hardener in a ratio of 2:1 (601),
- Mixing by adding special compounds containing additives, sulfur and cyano groups as well as the synthesized graphene quantum dots and fluorescein after the homogenization process (602),
- Printing on the metal surface with a screen printing device as the desired hidden label (603),
- Curing the applied surface after printing within the course of 30 minutes to 3 hours under UV illumination (604),
In order to be displayed in different spectra applied to the surface of precious metals such as gold and silver for tracking and security purposes.

9. A marking method (1) with a marking dye **characterized by** the following steps;
- Dissolving phenol in sodium thiosulfate acetone with the help of sonicator (301),
- Dropwise addition of hydrogen peroxide into the solution and mixing again with the ultrasonic device (302),
- The resulting solution is subjected to the hydrothermal synthesis by placing it in a Teflon-lined autoclave at 160°C and 220°C or preferably at 200°C for 20 h (303),
- Graphene quantum dots powder are obtained after purification, dialysis against pure water, and freeze-drying of the above solution (304),
- Dissolving thiourea, citric acid and urea in dimethylformamide (501),
- After homogenization of the solution, the solution is placed in the stainless steel autoclave and the carbon quantum dots are synthesized at 160°C to 200°C, preferably at 160°C, for 6 to 10 hours, preferably for 8 hours (502),
- After purification and dialysis (against pure water) of the obtained solution, a drying process is performed (503),
- Mixing epoxy resin and epoxy hardener in a ratio of 2:1 (601),
- Mixing by adding special compounds containing additives, sulfur and cyano groups as well as the synthesized carbon quantum dots, graphene quantum dots and fluorescein after the homogenization process (602),
- After the mixture has been homogenized, it is printed on the gold surface with a screen printing device as the desired hidden label (603),
- Curing of the applied surface after printing in the range from 30 minutes to 3 hours under UV illumination (604),
in order to be displayed in different spectra applied to the surface of precious metals such as gold and silver for tracking and security purposes.

10. A marking method (1) with a marking dye **characterized by** the following steps;
- Dissolving glucose in deionized water (401),
- After adding the ammonia solution, the solution is diluted five times with deionized water (402),
- The obtained solution is irradiated with microwave light between 280 W and 700 W, preferably 280 W, for 5 to 30 minutes, preferably 15 minutes, and the synthesis is carried out (403),
- After purification and dialysis of the obtained graphene quantum dots, a drying process is performed (404),
- Dissolving thiourea, citric acid and urea in dimethylformamide (501),
- After homogenization of the solution, the solution is placed in the stainless steel autoclave and the carbon quantum dots are synthesized at 160°C to 200°C, preferably at 160°C, for 6 to 10 hours, preferably for 8 hours (502),
- After purification and dialysis (against pure water) of the obtained solution, a drying process is performed (503),
- Mixing epoxy resin and epoxy hardener in a ratio of 2:1 (601),
- Mixing by adding special compounds containing additives, sulfur and cyano groups as well as the synthesized carbon quantum dots, graphene quantum dots and fluorescein after the homogenization process (602),
- After the mixture has been homogenized, it is printed on the gold surface with a screen printing device as the desired hidden label (603),
- Curing of the applied surface after printing in the range from 30 minutes to 3 hours under UV illumination (604),
in order to be displayed in different spectra applied to the surface of precious metals such as gold and silver for tracking and security purposes.

## Patentansprüche

1. Markierungsverfahren (1) mit einer speziefischen Markierungsfarbe, **gekennzeichnet durch** die folgenden Schritte:
- Auflösen von Phenol in Aceton mit Hilfe eines Ultraschallgeräts (201),
- Tropfenweise Zugabe von Wasserstoffperoxid zur Lösung und erneutes Mischen mit dem Ultraschallgerät (202),
- Zur Synthese von Graphen-Quantenpunkten mittels hydrothermalen Syntheseverfahrens wird die erhaltene Lösung 20 Stunden lang bei 160°C und 220°C oder vorzugsweise bei 200°C in einen teflonbeschichteten Autoklav gegeben (203),
- Gewinnen und Bereinigen des synthetisierten Graphen-Quantenpunkt-Pulvers durch Dialyse gegen reines Wasser und Trocknen der oben genannten Lösung durch Gefrieren (204),
- Mischen von Epoxidharz und Epoxidhärter im Verhältnis von 2:1 (601),
- Nach dem Homogenisierungsprozess, Mischen der oben genannten Mischung mit Zusatzstoffen, speziellen Verbindungen, die Schwefel- und Cyanogruppen enthalten, sowie synthetisierten Graphen-Quantenpunkten und Fluorescein (602),
- Aufdrucken des gewünschten versteckten Schildes auf die Metalloberfläche mit einem Siebdruckgerät (603),
- Aushärten der behandelten Oberfläche unter UV-Bestrahlung für einen Zeitraum von 30 Minuten bis 3 Stunden nach dem Druck (604),
Um in verschiedenen Spektren dargestellt zu werden, werden diese auf die Oberfläche von Edelmetallen wie Gold und Silber aufgebracht, um diese zu verfolgen und Sicherheitszwecken zu dienen.

2. Markierungsverfahren (1) mit einer Markierungsfarbe, **gekennzeichnet durch** die folgenden Schritte:
- Auflösen von Phenol und Natriumthiosulfat in Aceton mit Hilfe eines Ultraschallgeräts (301),
- Tropfenweise Zugabe von Wasserstoffperoxid zur Lösung und erneutes Mischen mit dem Ultraschallgerät (302),
- Zur Synthese von Graphen-Quantenpunkten mittels hydrothermalen Synthesevervahrens (303) wird die erhaltene Lösung 20 Stunden lang bei 160°C und 220°C oder vorzugsweise bei 200°C in einen teflonbeschichteten Autoklav gegeben (203),
- Gewinnen und Bereinigen des synthetisierten Graphen-Quantenpunkt-Pulvers durch Dialyse gegen reines Wasser und Trocknen der oben genannten Lösung durch Gefrieren (304),
- Mischen von Epoxidharz und Epoxidhärter im Verhältnis von 2:1 (601),
- Nach dem Homogenisierungsprozess, Mischen der oben genannten Mischung mit Zusatzstoffen, speziellen Verbindungen, die Schwefel- und Cyanogruppen enthalten, sowie synthetisierten Graphen-Quantenpunkten und Fluorescein (602),
- Aufdrucken des gewünschten versteckten Schildes auf die Metalloberfläche mit einem Siebdruckgerät (603),
- Aushärten der behandelten Oberfläche unter UV-Bestrahlung für einen Zeitraum von 30 Minuten bis 3 Stunden nach dem Druck (604),
Um in verschiedenen Spektren dargestellt zu werden, werden diese auf die Oberfläche von Edelmetallen wie Gold und Silber aufgebracht, um diese zu verfolgen und Sicherheitszwecken zu dienen.

3. Markierungsverfahren (1) mit einer Markierungsfarbe, **gekennzeichnet durch** die folgenden Schritte:
- Auflösen von Glukose in entionisiertem Wasser (401),
- Nach Zugabe der Ammoniaklösung fünfmaliges Verdünnen der Lösung mit entionisiertem Wasser (402),
- Bestrahlen der erhaltenen Lösung mit Mikrowellenlicht zwischen 280 W und 700 W, vorzugsweise von 280 W, für 5 bis 30 Minuten, vorzugsweise für 15 Minuten und Durchführen der Synthese (403),
- Bereinigen der erhaltenen Graphen-Quantenpunkte und Durchführen eines Trocknungsprozesses nach der Dialyse (404),
- Mischen von Epoxidharz und Epoxidhärter im Verhältnis von 2:1 (601),
- Nach dem Homogenisierungsprozess, Mischen durch Zugabe von Zusatzstoffen, speziellen Verbindungen, die Schwefel- und Cyanogruppen enthalten, sowie synthetisierten Graphen-Quantenpunkten und Fluorescein (602),
- Nachdem die Mischung homogen geworden ist, Drucken mit einem Siebdruckgerät als gewünschtes verstecktes Schild auf die Goldoberfläche (603),
- Aushärten der behandelten Oberfläche unter UV-Bestrahlung für einen Zeitraum von 30 Minuten bis 3 Stunden nach dem Druck (604),
Um in verschiedenen Spektren dargestellt zu werden, werden diese auf die Oberfläche von Edelmetallen wie Gold und Silber aufgebracht, um diese zu verfolgen und Sicherheitszwecken zu dienen.

4. Markierungsverfahren (1) mit einer Markierungsfarbe, **gekennzeichnet durch** die folgenden Schritte:
- Auflösen von Thioharnstoff, Zitronensäure und Harnstoff in Dimethylformamid (501),
- Nach der Homogenisierung der Lösung wird diese in einen Edelstahl-Autoklav gegeben und die Kohlenstoff-Quantenpunkte werden bei 160°C bis 200°C, vorzugsweise bei 160°C, 6 bis 10 Stunden lang, vorzugsweise 8 Stunden lang, synthetisiert (502),
- Nach der Reinigung und Dialyse (gegen reines Wasser) der erhaltenen Lösung wird ein Trocknungsprozess durchgeführt (503),
- Mischen von Epoxidharz und Epoxidhärter im Verhältnis von 2:1 (601),
- Nach dem Homogenisierungsprozess, Mischen der oben genannten Mischung mit Zusatzstoffen, speziellen Verbindungen, die Schwefel- und Cyanogruppen enthalten, sowie synthetisierten Kohlenstoff-Quantenpunkten und Fluorescein (602),
- Aufdrucken des gewünschten versteckten Schildes auf die Metalloberfläche mit einem Siebdruckgerät (603),
- Aushärten der behandelten Oberfläche unter UV-Bestrahlung für einen Zeitraum von 30 Minuten bis 3 Stunden nach dem Druck (604),
Um in verschiedenen Spektren dargestellt zu werden, werden diese auf die Oberfläche von Edelmetallen wie Gold und Silber aufgebracht, um diese zu verfolgen und Sicherheitszwecken zu dienen.

5. Markierungsverfahren (1) mit einer Markierungsfarbe, **gekennzeichnet durch** die folgenden Schritte:
- Auflösen von Phenol in Aceton mit Hilfe eines Ultraschallgeräts (201),
- Tropfenweise Zugabe von Wasserstoffperoxid zur Lösung und erneutes Mischen mit dem Ultraschallgerät (202),
- Zur Synthese von Graphen-Quantenpunkten mittels hydrothermalen Syntheseverfahrens wird die erhaltene Lösung 20 Stunden lang bei 160°C und 220°C oder vorzugsweise bei 200°C in einen teflonbeschichteten Autoklav gegeben (203),
- Gewinnen und Bereinigen des synthetisierten Graphen-Quantenpunkt-Pulvers durch Dialyse gegen reines Wasser und Trocknen der oben genannten Lösung durch Gefrieren (204),
- Auflösen von Phenol und Natriumthiosulfat in Aceton mit Hilfe eines Ultraschallgeräts (301),
- Tropfenweise Zugabe von Wasserstoffperoxid zur Lösung und erneutes Mischen mit dem Ultraschallgerät (302),
- Zur Synthese von Graphen-Quantenpunkten mittels hydrothermalen Syntheseverfahrens wird die erhaltene Lösung 20 Stunden lang bei 160°C und 220°C oder vorzugsweise bei 200°C in einen teflonbeschichteten Autoklav gegeben (303),
- Gewinnen und Bereinigen des synthetisierten Graphen-Quantenpunkt-Pulvers durch Dialyse gegen reines Wasser und Trocknen der oben genannten Lösung durch Gefrieren (304),
- Mischen von Epoxidharz und Epoxidhärter im Verhältnis von 2:1 (601),
- Nach dem Homogenisierungsprozess, Mischen der oben genannten Mischung mit Zusatzstoffen, speziellen Verbindungen, die Schwefel- und Cyanogruppen enthalten, sowie synthetisierten Graphen-Quantenpunkten und Fluorescein (602),
- Aufdrucken des gewünschten versteckten Schildes auf die Metalloberfläche mit einem Siebdruckgerät (603),
- Aushärten der behandelten Oberfläche unter UV-Bestrahlung für einen Zeitraum von 30 Minuten bis 3 Stunden nach dem Druck (604),
Um in verschiedenen Spektren dargestellt zu werden, werden diese auf die Oberfläche von Edelmetallen wie Gold und Silber aufgebracht, um diese zu verfolgen und Sicherheitszwecken zu dienen.

6. Markierungsverfahren (1) mit einer Markierungsfarbe, **gekennzeichnet durch** die folgenden Schritte:
- Auflösen von Phenol in Aceton mit Hilfe eines Ultraschallgeräts (201),
- Tropfenweise Zugabe von Wasserstoffperoxid zur Lösung und erneutes Mischen mit dem Ultraschallgerät (202),
- Zur Synthese von Graphen-Quantenpunkten mittels hydrothermalen Syntheseverfahrens wird die erhaltene Lösung 20 Stunden lang bei 160°C und 220°C oder vorzugsweise bei 200°C in einen teflonbeschichteten Autoklav gegeben (203),
- Gewinnen und Bereinigen des synthetisierten Graphen-Quantenpunkt-Pulvers durch Dialyse gegen reines Wasser und Trocknen der oben genannten Lösung durch Gefrieren (204),
- Auflösen von Glukose in entionisiertem Wasser (401),
- Nach Zugabe der Ammoniaklösung fünfmaliges Verdünnen der Lösung mit entionisiertem Wasser (402),
- Bestrahlen der erhaltenen Lösung mit Mikrowellenlicht zwischen 280 W und 700 W, vorzugsweise von 280 W, für 5 bis 30 Minuten, vorzugsweise für 15 Minuten und Durchführen der Synthese (403),
- Bereinigen der erhaltenen Graphen-Quantenpunkte und Durchführen eines Trocknungsprozesses nach der Dialyse (404),
- Mischen von Epoxidharz und Epoxidhärter im Verhältnis von 2:1 (601),
- Nach dem Homogenisierungsprozess, Mischen der oben genannten Mischung mit Zusatzstoffen, speziellen Verbindungen, die Schwefel- und Cyanogruppen enthalten, sowie synthetisierten Graphen-Quantenpunkten und Fluorescein (602),
- Aufdrucken des gewünschten versteckten Schildes auf die Metalloberfläche mit einem Siebdruckgerät (603),
- Aushärten der behandelten Oberfläche unter UV-Bestrahlung für einen Zeitraum von 30 Minuten bis 3 Stunden nach dem Druck (604),
Um in verschiedenen Spektren dargestellt zu werden, werden diese auf die Oberfläche von Edelmetallen wie Gold und Silber aufgebracht, um diese zu verfolgen und Sicherheitszwecken zu dienen.

7. Markierungsverfahren (1) mit einer Markierungsfarbe, **gekennzeichnet durch** die folgenden Schritte:
- Auflösen von Phenol in Aceton mit Hilfe eines Ultraschallgeräts (201),
- Tropfenweise Zugabe von Wasserstoffperoxid zur Lösung und erneutes Mischen mit dem Ultraschallgerät (202),
- Zur Synthese von Graphen-Quantenpunkten mittels hydrothermalen Syntheseverfahrens wird die erhaltene Lösung 20 Stunden lang bei 160°C und 220°C oder vorzugsweise bei 200°C in einen teflonbeschichteten Autoklav gegeben (203),
- Gewinnen und Bereinigen des synthetisierten Graphen-Quantenpunkt-Pulvers durch Dialyse gegen reines Wasser und Trocknen der oben genannten Lösung durch Gefrieren (204),
- Auflösen von Thioharnstoff, Zitronensäure und Harnstoff in Dimethylformamid (501),
- Nach der Homogenisierung der Lösung wird diese in einen Edelstahl-Autoklav gegeben und die Kohlenstoff-Quantenpunkte werden bei 160°C bis 200°C, vorzugsweise bei 160°C, 6 bis 10 Stunden lang, vorzugsweise 8 Stunden lang, synthetisiert (502),
- Zur Synthese von Graphen-Quantenpunkten mittels hydrothermalen Syntheseverfahrens wird die erhaltene Lösung für 20 Stunden bei 160°C und 220°C oder vorzugsweise bei 200 °C in einen teflonbeschichteten Autoklav gegeben (503),
- Mischen von Epoxidharz und Epoxidhärter im Verhältnis von 2:1 (601),
- Nach dem Homogenisierungsprozess, Mischen der oben genannten Mischung mit Zusatzstoffen, speziellen Verbindungen, die Schwefel- und Cyanogruppen enthalten, sowie synthetisierten Kohlenstoff-Quantenpunkten, Graphen-Quantenpunkten und Fluorescein (602),
- Aufdrucken des gewünschten versteckten Schildes auf die Metalloberfläche mit einem Siebdruckgerät (603),
- Aushärten der behandelten Oberfläche unter UV-Bestrahlung für einen Zeitraum von 30 Minuten bis 3 Stunden nach dem Druck (604),
Um in verschiedenen Spektren dargestellt zu werden, werden diese auf die Oberfläche von Edelmetallen wie Gold und Silber aufgebracht, um diese zu verfolgen und Sicherheitszwecken zu dienen.

8. Markierungsverfahren (1) mit einer Markierungsfarbe, **gekennzeichnet durch** die folgenden Schritte:
- Auflösen von Phenol und Natriumthiosulfat in Aceton mit Hilfe eines Ultraschallgeräts (301),
- Tropfenweise Zugabe von Wasserstoffperoxid zur Lösung und erneutes Mischen mit dem Ultraschallgerät (302),
- Zur Synthese von Graphen-Quantenpunkten mittels hydrothermalen Syntheseverfahrens wird die erhaltene Lösung 20 Stunden lang bei 160°C und 220°C oder vorzugsweise bei 200°C in einen teflonbeschichteten Autoklav gegeben (303),
- Gewinnen und Bereinigen des synthetisierten Graphen-Quantenpunkt-Pulvers durch Dialyse gegen reines Wasser und Trocknen der oben genannten Lösung durch Gefrieren (304),
- Auflösen von Glukose in entionisiertem Wasser (401),
- Nach Zugabe von Ammoniak zur Lösung, fünfmaliges Verdünnen der Lösung mit entionisiertem Wasser (402),
- Bestrahlen der erhaltenen Lösung mit Mikrowellenlicht zwischen 280 W und 700 W, vorzugsweise von 280 W, für 5 bis 30 Minuten, vorzugsweise für 15 Minuten und Durchführen der Synthese (403),
- Gewinnen und Bereinigen des synthetisierten Graphen-Quantenpunkt-Pulvers durch Dialyse gegen reines Wasser und Trocknen der oben genannten Lösung durch Gefrieren (404),
- Mischen von Epoxidharz und Epoxidhärter im Verhältnis von 2:1 (601),
- Nach dem Homogenisierungsprozess, Hinzufügen und Mischen von Zusatzstoffen, speziellen Verbindungen, die Schwefel- und Cyanogruppen enthalten, sowie synthetisierten Graphen-Quantenpunkte und Fluorescein (602),
- Aufdrucken des gewünschten versteckten Schildes auf die Metalloberfläche mit einem Siebdruckgerät (603),
- Aushärten der behandelten Oberfläche unter UV-Bestrahlung für einen Zeitraum von 30 Minuten bis 3 Stunden nach dem Druck (604),
Um in verschiedenen Spektren dargestellt zu werden, werden diese auf die Oberfläche von Edelmetallen wie Gold und Silber aufgebracht, um diese zu verfolgen und Sicherheitszwecken zu dienen.

9. Markierungsverfahren (1) mit einer Markierungsfarbe, **gekennzeichnet durch** die folgenden Schritte:
- Auflösen von Phenol und Natriumthiosulfat in Aceton mit Hilfe eines Ultraschallgeräts (301),
- Tropfenweise Zugabe von Wasserstoffperoxid zur Lösung und erneutes Mischen mit dem Ultraschallgerät (302),
- Die erhaltene Lösung wird 20 Stunden lang bei 160°C und 220°C oder vorzugsweise bei 200°C in einem teflonbeschichteten Autoklaven einer hydrothermalen Synthese unterzogen (203),
- Gewinnen des Graphen-Quantenpunkt-Pulvers nach Bereinigung und Dialyse gegen reines Wasser und Trocknen der oben genannten Lösung durch Gefrieren (304),
- Auflösen von Thioharnstoff, Zitronensäure und Harnstoff in Dimethylformamid (501),
- Nach der Homogenisierung der Lösung wird diese in einen Edelstahl-Autoklav gegeben und die Kohlenstoff-Quantenpunkte werden bei 160°C bis 200°C, vorzugsweise bei 160°C, 6 bis 10 Stunden lang, vorzugsweise 8 Stunden lang, synthetisiert (502),
- Nach der Reinigung und Dialyse (gegen reines Wasser) der erhaltenen Lösung wird ein Trocknungsprozess durchgeführt (503),
- Mischen von Epoxidharz und Epoxidhärter im Verhältnis von 2:1 (601),
- Nach dem Homogenisierungsprozess, Hinzufügen und Mischen von Zusatzstoffen, speziellen Verbindungen, die Schwefel- und Cyanogruppen enthalten, sowie synthetisierten Kohlenstoff-Quantenpunkten, Graphen-Quantenpunkten und Fluorescein (602),
- Nachdem die Mischung homogen geworden ist, Drucken mit einem Siebdruckgerät als gewünschtes verstecktes Schild auf die Goldoberfläche (603),
- Aushärten der behandelten Oberfläche unter UV-Bestrahlung für einen Zeitraum von 30 Minuten bis 3 Stunden nach dem Druck (604),
Um in verschiedenen Spektren dargestellt zu werden, werden diese auf die Oberfläche von Edelmetallen wie Gold und Silber aufgebracht, um diese zu verfolgen und Sicherheitszwecken zu dienen.

10. Markierungsverfahren (1) mit einer Markierungsfarbe, **gekennzeichnet durch** die folgenden Schritte:
- Auflösen von Glukose in entionisiertem Wasser (401),
- Nach Zugabe der Ammoniaklösung fünfmaliges Verdünnen der Lösung mit entionisiertem Wasser (402),
- Bestrahlen der erhaltenen Lösung mit Mikrowellenlicht zwischen 280 W und 700 W, vorzugsweise von 280 W, für 5 bis 30 Minuten, vorzugsweise für 15 Minuten und Durchführen der Synthese (403),
- Bereinigen der erhaltenen Graphen-Quantenpunkte und Durchführen eines Trocknungsprozesses nach der Dialyse (404),
- Auflösen von Thioharnstoff, Zitronensäure und Harnstoff in Dimethylformamid (501),
- Nach der Homogenisierung der Lösung wird diese in einen Edelstahl-Autoklav gegeben und die Kohlenstoff-Quantenpunkte werden bei 160°C bis 200°C, vorzugsweise bei 160°C, 6 bis 10 Stunden lang, vorzugsweise 8 Stunden lang, synthetisiert (502),
- Nach der Reinigung und Dialyse (gegen reines Wasser) der erhaltenen Lösung wird ein Trocknungsprozess durchgeführt (503),
- Mischen von Epoxidharz und Epoxidhärter im Verhältnis von 2:1 (601),
- Nach dem Homogenisierungsprozess, Hinzufügen und Mischen von Zusatzstoffen, speziellen Verbindungen, die Schwefel- und Cyanogruppen enthalten, sowie synthetisierten Kohlenstoff-Quantenpunkten, Graphen-Quantenpunkten und Fluorescein (602),
- Nachdem die Mischung homogen geworden ist, Drucken mit einem Siebdruckgerät als gewünschtes verstecktes Schild auf die Goldoberfläche (603),
- Aushärten der behandelten Oberfläche unter UV-Bestrahlung für einen Zeitraum von 30 Minuten bis 3 Stunden nach dem Druck (604),
Um in verschiedenen Spektren dargestellt zu werden, werden diese auf die Oberfläche von Edelmetallen wie Gold und Silber aufgebracht, um diese zu verfolgen und Sicherheitszwecken zu dienen.

## Revendications

1. Procédé de marquage (1) avec un colorant de marquage spécifique, **caractérisé par** les étapes suivantes :
- Dissoudre le phénol dans l'acétone à l'aide d'un sonicateur (201),
- Ajouter goutte à goutte le peroxyde d'hydrogène à la solution et mélanger à nouveau à l'aide du sonicateur (202),
- Placer la solution obtenue dans un autoclave revêtu de téflon à 160 °C et 220 °C ou, de préférence, à 200 °C pendant 20 heures pour synthétiser des points quantiques de graphène via le procédé de synthèse hydrothermique (203),
- Obtenir et purifier la poudre de points quantiques de graphène synthétisés par dialyse contre de l'eau pure, et lyophiliser la solution ci-dessus (204),
- Mélanger la résine époxy et le durcisseur époxy dans un rapport de 2:1 (601),
- Mélanger le mélange ci-dessus avec des composés spéciaux contenant des additifs, des groupes soufre et cyano, et les points quantiques de graphène synthétisés et la fluorescéine après le processus d'homogénéisation (602),
- Imprimer sur la surface métallique à l'aide d'un dispositif de sérigraphie l'étiquette cachée souhaitée (603),
- Durcir la surface appliquée après impression dans un temps compris entre 30 minutes et 3 heures sous illumination UV (604),
afin d'être affiché dans différents spectres appliqués à la surface de métaux précieux tels que l'or et l'argent à des fins de suivi et de sécurité.

2. Procédé de marquage (1) avec un colorant de marquage, **caractérisé par** les étapes suivantes :
- Dissoudre le phénol et le thiosulfate de sodium dans l'acétone à l'aide d'un sonicateur (301),
- Ajouter goutte à goutte le peroxyde d'hydrogène à la solution et mélanger à nouveau à l'aide du sonicateur (302),
- Placer la solution obtenue dans un autoclave revêtu de téflon à 160 °C et 220 °C ou, de préférence, à 200 °C pendant 20 heures (203) pour synthétiser des points quantiques de graphène via le procédé de synthèse hydrothermique (303),
- Obtenir et purifier la poudre de points quantiques de graphène synthétisés par dialyse contre de l'eau pure, et lyophiliser la solution ci-dessus (304),
- Mélanger la résine époxy et le durcisseur époxy dans un rapport de 2:1 (601),
- Mélanger le mélange ci-dessus avec des composés spéciaux contenant des additifs, des groupes soufre et cyano, et les points quantiques de graphène synthétisés et la fluorescéine après le processus d'homogénéisation (602),
- Imprimer sur la surface métallique à l'aide d'un dispositif de sérigraphie l'étiquette cachée souhaitée (603),
- Durcir la surface appliquée après impression dans un temps compris entre 30 minutes et 3 heures sous illumination UV (604),
afin d'être affiché dans différents spectres appliqués à la surface de métaux précieux tels que l'or et l'argent à des fins de suivi et de sécurité.

3. Procédé de marquage (1) avec un colorant de marquage, **caractérisé par** les étapes suivantes :
- Dissoudre le glucose dans de l'eau déionisée (401),
- Après avoir ajouté la solution d'ammoniaque, diluer la solution cinq fois avec de l'eau déionisée (402).
- Irradier la solution obtenue avec de la lumière micro-ondes entre 280 W et 700 W, de préférence 280 W, pendant 5 à 30 minutes, de préférence 15 minutes, et effectuer la synthèse (403),
- Après la purification et la dialyse des points quantiques de graphène obtenus, effectuer un processus de séchage (404),
- Mélanger la résine époxy et le durcisseur époxy dans un rapport de 2:1 (601),
- Mélanger en ajoutant des composés spéciaux contenant des additifs, des groupes soufre et cyano, et les points quantiques de graphène synthétisés et la fluorescéine après le processus d'homogénéisation (602),
- Après le mélange est homogénéisé, l'imprimer sur la surface métallique à l'aide d'un dispositif de sérigraphie comme l'étiquette cachée souhaitée (603),
- Durcir la surface appliquée après impression dans un temps compris entre 30 minutes et 3 heures sous illumination UV (604),
afin d'être affiché dans différents spectres appliqués à la surface de métaux précieux tels que l'or et l'argent à des fins de suivi et de sécurité.

4. Procédé de marquage (1) avec un colorant de marquage, **caractérisé par** les étapes suivantes :
- Dissoudre la thiourée, l'acide citrique et l'urée dans le diméthylformamide (501),
- Après homogénéisation de la solution, placer la solution dans l'autoclave en acier inoxydable et synthétiser les points quantiques de carbone à 160 °C à 200 °C, de préférence à 160 °C, pendant 6 à 10 heures, de préférence pendant 8 heures (502),
- Après la purification et la dialyse (contre de l'eau pure) de la solution obtenu, effectuer un processus de séchage (503),
- Mélanger la résine époxy et le durcisseur époxy dans un rapport de 2:1 (601),
- Mélanger le mélange ci-dessus avec des composés spéciaux contenant des additifs, des groupes soufre et cyano, et les points quantiques de carbone synthétisés et la fluorescéine après le processus d'homogénéisation (602),
- Imprimer sur la surface métallique à l'aide d'un dispositif de sérigraphie l'étiquette cachée souhaitée (603),
- Durcir la surface appliquée après impression dans un temps compris entre 30 minutes et 3 heures sous illumination UV (604),
afin d'être affiché dans différents spectres appliqués à la surface de métaux précieux tels que l'or et l'argent à des fins de suivi et de sécurité.

5. Procédé de marquage (1) avec un colorant de marquage, **caractérisé par** les étapes suivantes :
- Dissoudre le phénol dans l'acétone à l'aide d'un sonicateur (201),
- Ajouter goutte à goutte le peroxyde d'hydrogène à la solution et mélanger à nouveau à l'aide du sonicateur (202),
- Placer la solution obtenue dans un autoclave revêtu de téflon à 160 °C et 220 °C ou, de préférence, à 200 °C pendant 20 heures pour synthétiser des points quantiques de graphène via le procédé de synthèse hydrothermique (203),
- Obtenir et purifier la poudre de points quantiques de graphène synthétisés par dialyse contre de l'eau pure, et lyophiliser la solution ci-dessus (204),
- Dissoudre le phénol et le thiosulfate de sodium dans l'acétone à l'aide d'un sonicateur (301),
- Ajouter goutte à goutte le peroxyde d'hydrogène à la solution et mélanger à nouveau à l'aide du sonicateur (302),
- Placer la solution obtenue dans un autoclave revêtu de téflon à 160 °C et 220 °C ou, de préférence, à 200 °C pendant 20 heures pour synthétiser des points quantiques de graphène via le procédé de synthèse hydrothermique (303),
- Obtenir et purifier la poudre de points quantiques de graphène synthétisés par dialyse contre de l'eau pure, et lyophiliser la solution ci-dessus (304),
- Mélanger la résine époxy et le durcisseur époxy dans un rapport de 2:1 (601),
- Mélanger le mélange ci-dessus avec des composés spéciaux contenant des additifs, des groupes soufre et cyano, et les points quantiques de graphène synthétisés et la fluorescéine après le processus d'homogénéisation (602),
- Imprimer sur la surface métallique à l'aide d'un dispositif de sérigraphie l'étiquette cachée souhaitée (603),
- Durcir la surface appliquée après impression dans un temps compris entre 30 minutes et 3 heures sous illumination UV (604),
afin d'être affiché dans différents spectres appliqués à la surface de métaux précieux tels que l'or et l'argent à des fins de suivi et de sécurité.

6. Procédé de marquage (1) avec un colorant de marquage, **caractérisé par** les étapes suivantes :
- Dissoudre le phénol dans l'acétone à l'aide d'un sonicateur (201),
- Ajouter goutte à goutte le peroxyde d'hydrogène à la solution et mélanger à nouveau à l'aide du sonicateur (202),
- Placer la solution obtenue dans un autoclave revêtu de téflon à 160 °C et 220 °C ou, de préférence, à 200 °C pendant 20 heures pour synthétiser des points quantiques de graphène via le procédé de synthèse hydrothermique (203),
- Obtenir et purifier la poudre de points quantiques de graphène synthétisés par dialyse contre de l'eau pure, et lyophiliser la solution ci-dessus (204),
- Dissoudre le glucose dans de l'eau déionisée (401),
- Après avoir ajouté la solution d'ammoniaque, diluer la solution cinq fois avec de l'eau déionisée (402).
- Irradier la solution obtenue avec de la lumière micro-ondes entre 280 W et 700 W, de préférence 280 W, pendant 5 à 30 minutes, de préférence 15 minutes, et effectuer la synthèse (403),
- Après la purification et la dialyse des points quantiques de graphène obtenus, effectuer un processus de séchage (404),
- Mélanger la résine époxy et le durcisseur époxy dans un rapport de 2:1 (601),
- Mélanger le mélange ci-dessus avec des composés spéciaux contenant des additifs, des groupes soufre et cyano, et les points quantiques de graphène synthétisés et la fluorescéine après le processus d'homogénéisation (602),
- Imprimer sur la surface métallique à l'aide d'un dispositif de sérigraphie l'étiquette cachée souhaitée (603),
- Durcir la surface appliquée après impression dans un temps compris entre 30 minutes et 3 heures sous illumination UV (604),
afin d'être affiché dans différents spectres appliqués à la surface de métaux précieux tels que l'or et l'argent à des fins de suivi et de sécurité.

7. Procédé de marquage (1) avec un colorant de marquage, **caractérisé par** les étapes suivantes :
- Dissoudre le phénol dans l'acétone à l'aide d'un sonicateur (201),
- Ajouter goutte à goutte le peroxyde d'hydrogène à la solution et mélanger à nouveau à l'aide du sonicateur (202),
- Placer la solution obtenue dans un autoclave revêtu de téflon à 160 °C et 220 °C ou, de préférence, à 200 °C pendant 20 heures pour synthétiser des points quantiques de graphène via le procédé de synthèse hydrothermique (203),
- Obtenir et purifier la poudre de points quantiques de graphène synthétisés par dialyse contre de l'eau pure, et lyophiliser la solution ci-dessus (204),
- Dissoudre la thiourée, l'acide citrique et l'urée dans le diméthylformamide (501),
- Après homogénéisation de la solution, placer la solution dans l'autoclave en acier inoxydable et synthétiser les points quantiques de carbone à 160 °C à 200 °C, de préférence à 160 °C, pendant 6 à 10 heures, de préférence pendant 8 heures (502),
- Placer la solution obtenue dans un autoclave revêtu de téflon à 160 °C et 220 °C ou, de préférence, à 200 °C pendant 20 heures pour synthétiser des points quantiques de graphène via le procédé de synthèse hydrothermique (503),
- Mélanger la résine époxy et le durcisseur époxy dans un rapport de 2:1 (601),
- Mélanger le mélange ci-dessus avec des composés spéciaux contenant des additifs, des groupes soufre et cyano, et les points quantiques de carbone, les points quantiques de graphène synthétisés et la fluorescéine après le processus d'homogénéisation (602),
- Imprimer sur la surface métallique à l'aide d'un dispositif de sérigraphie l'étiquette cachée souhaitée (603),
- Durcir la surface appliquée après impression dans un temps compris entre 30 minutes et 3 heures sous illumination UV (604),
afin d'être affiché dans différents spectres appliqués à la surface de métaux précieux tels que l'or et l'argent à des fins de suivi et de sécurité.

8. Procédé de marquage (1) avec un colorant de marquage, **caractérisé par** les étapes suivantes :
- Dissoudre le phénol et le thiosulfate de sodium dans l'acétone à l'aide d'un sonicateur (301),
- Ajouter goutte à goutte le peroxyde d'hydrogène à la solution et mélanger à nouveau à l'aide d'un dispositif de sonification (302),
- Placer la solution obtenue dans un autoclave revêtu de téflon à 160 °C et 220 °C ou, de préférence, à 200 °C pendant 20 heures pour synthétiser des points quantiques de graphène via le procédé de synthèse hydrothermique (303),
- Obtenir et purifier la poudre de points quantiques de graphène synthétisés par dialyse contre de l'eau pure, et lyophiliser la solution ci-dessus (304),
- Dissoudre le glucose dans de l'eau déionisée (401),
- Diluer la solution cinq fois avec de l'eau déionisée après avoir ajouté l'ammoniac à la solution (402),
- Irradier la solution obtenue avec de la lumière micro-ondes entre 280 W et 700 W, de préférence 280 W, pendant 5 à 30 minutes, de préférence 15 minutes, et effectuer la synthèse (403),
- Obtenir et purifier la poudre de points quantiques de graphène synthétisés par dialyse contre de l'eau pure, et lyophiliser la solution ci-dessus (404),
- Mélanger la résine époxy et le durcisseur époxy dans un rapport de 2:1 (601),
- Mélanger en ajoutant des composés spéciaux contenant des additifs, des groupes soufre et cyano, et les points quantiques de graphène synthétisés et la fluorescéine après le processus d'homogénéisation (602),
- Imprimer sur la surface métallique à l'aide d'un dispositif de sérigraphie l'étiquette cachée souhaitée (603),
- Durcir la surface appliquée après impression dans un temps compris entre 30 minutes et 3 heures sous illumination UV (604),
afin d'être affiché dans différents spectres appliqués à la surface de métaux précieux tels que l'or et l'argent à des fins de suivi et de sécurité.

9. Procédé de marquage (1) avec un colorant de marquage, **caractérisé par** les étapes suivantes :
- Dissoudre le phénol et le thiosulfate de sodium dans l'acétone à l'aide d'un sonicateur (301),
- Ajouter goutte à goutte le peroxyde d'hydrogène à la solution et mélanger à nouveau à l'aide du dispositif ultrasonique (302),
- Soumettre la solution obtenue à une synthèse hydrothermique en la plaçant dans un autoclave revêtu de téflon à 160 °C et 220 °C ou, de préférence, à 200 °C pendant 20 heures (303),
- Obtenir les points quantiques de graphène après la purification et la dialyse contre de l'eau pure, et lyophiliser la solution ci-dessus (304),
- Dissoudre la thiourée, l'acide citrique et l'urée dans le diméthylformamide (501),
- Après homogénéisation de la solution, placer la solution dans l'autoclave en acier inoxydable et synthétiser les points quantiques de carbone à 160 °C à 200 °C, de préférence à 160 °C, pendant 6 à 10 heures, de préférence pendant 8 heures (502),
- Après la purification et la dialyse (contre de l'eau pure) de la solution obtenu, effectuer un processus de séchage (503),
- Mélanger la résine époxy et le durcisseur époxy dans un rapport de 2:1 (601),
- Mélanger en ajoutant des composés spéciaux contenant des additifs, des groupes soufre et cyano, et les points quantiques de carbone, les points quantiques de graphène synthétisés et la fluorescéine après le processus d'homogénéisation (602),
- Après le mélange est homogénéisé, l'imprimer sur la surface métallique à l'aide d'un dispositif de sérigraphie comme l'étiquette cachée souhaitée (603),
- Durcir la surface appliquée après impression dans un temps compris entre 30 minutes et 3 heures sous illumination UV (604),
afin d'être affiché dans différents spectres appliqués à la surface de métaux précieux tels que l'or et l'argent à des fins de suivi et de sécurité.

10. Procédé de marquage (1) avec un colorant de marquage, **caractérisé par** les étapes suivantes :
- Dissoudre le glucose dans de l'eau déionisée (401),
- Après avoir ajouté la solution d'ammoniaque, diluer la solution cinq fois avec de l'eau déionisée (402).
- Irradier la solution obtenue avec de la lumière micro-ondes entre 280 W et 700 W, de préférence 280 W, pendant 5 à 30 minutes, de préférence 15 minutes, et effectuer la synthèse (403),
- Après la purification et la dialyse des points quantiques de graphène obtenus, effectuer un processus de séchage (404),
- Dissoudre la thiourée, l'acide citrique et l'urée dans le diméthylformamide (501),
- Après homogénéisation de la solution, placer la solution dans l'autoclave en acier inoxydable et synthétiser les points quantiques de carbone à 160 °C à 200 °C, de préférence à 160 °C, pendant 6 à 10 heures, de préférence pendant 8 heures (502),
- Après la purification et la dialyse (contre de l'eau pure) de la solution obtenu, effectuer un processus de séchage (503),
- Mélanger la résine époxy et le durcisseur époxy dans un rapport de 2:1 (601),
- Mélanger en ajoutant des composés spéciaux contenant des additifs, des groupes soufre et cyano, et les points quantiques de carbone, les points quantiques de graphène synthétisés et la fluorescéine après le processus d'homogénéisation (602),
- Après le mélange est homogénéisé, l'imprimer sur la surface métallique à l'aide d'un dispositif de sérigraphie comme l'étiquette cachée souhaitée (603),
- Durcir la surface appliquée après impression dans un temps compris entre 30 minutes et 3 heures sous illumination UV (604),
afin d'être affiché dans différents spectres appliqués à la surface de métaux précieux tels que l'or et l'argent à des fins de suivi et de sécurité.
